# EUROPEAN PATENT SPECIFICATION

(11) **EP 4 399 419 B1**
(45) Date of publication and mention of the grant of the patent: **14.10.2026**
(21) Application number: 21844357.0
(22) Date of filing: 23.12.2021
(51) Int. Cl.: F16H 25/20

(54) **SCREW AND NUT LINEAR DRIVE ASSEMBLY**
LINEARGETRIEBEANORDNUNG MIT SCHRAUBE UND MUTTER
ENSEMBLE D'ENTRAÎNEMENT LINÉAIRE À VIS ET ÉCROU

(43) Date of publication of application: 17.07.2024
(73) Proprietor: Kongsberg Automotive Holding 2 AS, 3611 Kongsberg (NO)
(72) Inventor: PETTERSEN, Ketil, 3601 Kongsberg (NO); KARLSEN, Kjell Ivar, 3601 Kongsberg (NO); OLDEIDE, Christer, 3601 Kongsberg (NO); HAUGUM, Henrik, 3601 Kongsberg (NO); ARNE, Stein-Erik, 3601 Kongsberg (NO); JUNG, Jacob, 3601 Kongsberg (NO); IVERSEN, Björn, 3601 Kongsberg (NO); VESTGARD, Bard, 3601 Kongsberg (NO)
(74) Representative: Uexküll & Stolberg
(86) International application number: PCT/EP2021/087595
(87) International publication number: WO 2023/117120

(56) References cited:
- WO-A1-2015/081951
- WO-A1-2017/129595
- DE-A1- 102009 036 824
- FR-A5- 2 079 668
- US-A1- 2019 040 919

## Description

The present invention is directed to a screw and nut linear drive assembly comprising a housing, a screw within the housing, an electric motor for rotating the screw, a nut which is driven, when the screw is rotated, to move linearly in a longitudinal direction coinciding with the screw axis, an axial force transfer arrangement to transfer force from the nut to a push rod to be connected to a member to be actuated by the screw and nut linear drive assembly.

WO 2017/129595 A1, WO 2019/238224 A1, and US 2019/040919 A1 disclose screw and nut linear drive assemblies according to the preamble of claim 1. In these documents the linear drive assembly disclosed is an electric clutch actuator. This electric clutch actuator comprises a screw within a housing, an electric motor for rotating the screw, a nut which is driven, when the screw is rotated by the electric motor, to move linearly in a longitudinal direction coinciding with the screw axis, and an axial force transfer arrangement to transfer movement of the nut to a push rod configured to transfer force to a member to be actuated by the screw and nut linear drive assembly. The push rod is extending in a direction parallel to the screw axis, but is transversely offset with respect to the screw axis. The push rod acts on an end portion of a clutch lever such that when the push rod is shifted in longitudinal direction the clutch lever is driven to pivot to disengage the clutch when the linear screw and nut arrangement is activated and exerting a force on the push rod. A spring rests with one of its ends on the nut and is, with its opposite end, in abutment against a pressure piece which is guided in the housing of the drive assembly for linear movement along the longitudinal direction defined by the screw axis. The spring keeps a preload on the clutch when the screw and nut drive assembly is inactive, i.e. the clutch is engaged. The pressure piece is coupled with the push rod and the axial force transfer arrangement such that, when the nut is driven and moved in longitudinal direction a force is transmitted via the axial force transfer arrangement of intermediate components in contact with each other to the pressure piece and further to the push rod so that the push rod in turn is moved in longitudinal direction to thereby pivot the clutch lever.

The pressure piece is guided for linear movement along the longitudinal screw axis. Since the push rod is laterally offset with respect to the longitudinal screw axis a torque is acting on the pressure piece if force is transmitted from the pressure piece to the push rod. Such torque can be further transmitted through the axial force transfer arrangement to the nut. Such torque on the nut of a screw and nut drive arrangement results in increased friction when the nut is driven to move along the screw which eventually leads to increased tear and wear of the screw and nut linear drive assembly.

FR 2 079 668 A5 describes a screw and nut linear drive assembly including an axial force transfer arrangement having a first and a second axial force transferring component, wherein balls are received in a linear channel formed by opposing linear grooves formed in the facing surfaces of the first and a second axial force transferring component, respectively.

It is an object of the present invention to arrange a screw and nut linear drive assembly such that any torque created by the force transmission of the screw and nut linear drive assembly on the member to be actuated is prevented from being transferred to the nut, or is at least substantially reduced when it is acting on the nut.

This object is achieved by the screw and nut linear drive assembly comprising the features of claim 1. Preferred embodiments of the invention are set out in the dependent claims.

According to the present invention the axial force transfer arrangement which is configured to transfer force from the nut to a push rod comprises a sequential arrangement of axial force transferring components, which arrangement of axial force transferring components comprises, in the direction from push rod to the nut, a first and a second axial force transferring component in force transmitting contact which each other. The first and second axial force transferring components are configured such that first contact points between them define a first axis in a transverse plane perpendicular to the longitudinal direction, about which first axis the first axial force transferring component is capable of tilting with respect to the second axial force transferring component in order to reduce transfer of any torque to the nut. The first axis is defined by a line connecting the first contact points. The contact points are not points in a mathematical sense, but can also have a certain extension. For example, the first contact points can also form a continuous line which defines the first axis; such a contact line can for example be formed if one of the components has a planar contact surface and the other one has a facing contact surface comprising a linear ridge which contacts the planar contact surface of the first component so that the components are capable of tilting about the axis defined by the ridge. Alternatively, there may be only two spaced apart first contact points, wherein the first axis is defined by the line connecting the two first contact points. The first axial force transferring component is a preload plunger guided for linear movement in the housing along the longitudinal direction, said preload plunger having a recess disposed in a front face thereof and configured to receive and to be connected to an end portion of the push rod, wherein the preload plunger comprises a central bore extending along the longitudinal direction and forming an opening in a back face opposite to the front face and having, opposite to the opening, an abutment surface formed by a circumferential shoulder in the central bore. The second axial force transferring component is a bushing tube which is at least partially received in the central bore. The bushing tube and the abutment surface of the central bore being configured to come into abutment with each other in first contact points only which define the first axis, wherein an outer wall portion of the bushing tube which is received in the central bore is provided with resilient surface features which permit tilting movements of the bushing tube with respect to the central bore of the preload plunger about the first axis defined by the first contact points. The resilient surface features of the bushing tube are in contact with the inner wall of the central bore. In case of an external torque acting on the preload plunger, the preload plunger may absorb such torque by tilting, wherein this tilting on the preload plunger is not transferred to the bushing tube which remains stationary within the central bore of the preload plunger and permits the tilting movement of the preload plunger by absorbing this relative movement in the elastic surface features of the bushing tube.

The first axis is, in order to be able to reduce transfer of any torque to the nut, oriented such that is not parallel to a line connecting the screw axis with the contact point of the axial force transfer arrangement with a component to be actuated by the axial force transfer arrangement. Preferably the first axis is oriented perpendicular to this line connecting the central axis of the screw with the point where force is transferred from the axial force transfer arrangements to the push rod which in turn drives the member to be actuated by the linear drive assembly. The latter arrangement achieves the most efficient torque absorption in the axial force transfer arrangement, and thus most efficiently prevents that torque is transmitted to the nut.

In a preferred embodiment the sequential arrangement of axial force transferring components comprises a third axial force transferring component which is disposed between the nut and the second force transmitting component and which is in force transmitting contact with the second force transmitting component. The second and third axial force transferring components are configured such that second contact points between them define a second axis in a transverse plane (perpendicular to the longitudinal axis) about which second axis the second axial force transferring component is capable of tilting with respect to the third axial force transferring component to reduce transfer of any torque to the nut, wherein the second axis is oriented perpendicular to the first axis. The capability of tilting in the axial force transfer arrangement about the first axis has the main function to absorb torque exerted on the first force transferring component when force is transmitted to the push rod and further to a member to be actuated, wherein such torque may be absorbed by permitting a certain tilting movement of the first force transferring component with respect to the second force transmitting component which, therefore, is not subject to the torque acting on the first force transferring component. In other words, by allowing this tilting movement of the first force transferring component, the second force transmitting component does not take part in the tilting movement and therefore no torque is transmitted. The capability of tilting about the second axis in the axial force transfer arrangement permits to absorb tolerances, and such tilting is normally of smaller magnitudes than the capability of the first force transferring component about the first axis to absorb any torque. For example, if there is an angular misalignment or a small longitudinal offset between two sides of the load transferring components this would result in side loads on the nut and screw if there would be no compensation capability by tilting about the second axis, i.e. by allowing the second force transfer component to tilt about the second axis with respect to the third force transferring component which is fully supported on the nut and therefore does not take part in this tilting movement. Thus, in this embodiment the axial force transfer arrangement permits tilting movements about two perpendicular axes within the axial force transfer arrangement which essentially decouples the nut from any force or torque transfer which is not a purely axial force transfer in the axial (longitudinal) direction of the screw.

In a preferred embodiment the third axial force transferring component is an axial load carrier ring being guided for linear movement with the nut and being in driving contact with and fixed in longitudinal direction to the nut so that the load carrier ring moves axially with the nut as one component. Two opposite rotation stop arms extend from the axial load carrier ring and are received in recesses of the preload plunger configured to prevent rotational movement of the axial load carrier ring relative to the preload plunger. The end faces of the axial load carrier ring and the bushing tube facing each other are configured such that they come into abutment against each other in two diametrically opposite contact points only, wherein the two diametrically opposite contact points define the second transverse axis which is perpendicular to first axis.

In a preferred embodiment the resilient surfaces features of the bushing tube comprise two bulges projecting from and extending circumferentially around the outer wall of the bushing tube and being spaced apart in axial direction of the bushing tube, wherein the bulges are made of elastic material and are dimensioned to be in contact with the inner wall of the central bore of the preload plunger when the bushing tube is received in the central bore of the preload plunger.

In preferred embodiments the screw and nut linear drive assembly is configured as a ball screw and nut assembly or as a lead screw and nut assembly.

In the following a preferred embodiment of the invention will be described with reference to the drawings in which:
Fig. 1 shows a perspective view of a screw and nut linear drive assembly in the form of an electric clutch actuator;
Fig. 2 shows a top view of the electric clutch actuator of Fig. 1, with a central portion of a housing cut out and internal components being shown in cross-section;
Fig. 3 shows a side view of the electric clutch actuator of Fig. 1, with a central portion of a housing cut out and internal components being shown in cross-section;
Fig. 4 is an enlarged partial view of the cross-section portion of Fig. 2;
Fig. 5 is an enlarged partial view of the cross-section portion of Fig. 3;
Fig. 6 is a perspective view of a part of the axial force transfer arrangement of Figs. 2 to 5;
Fig. 7 is a schematic plan view of the axial force transfer arrangement along a first axis which is disposed in a transverse plane perpendicular to an axial direction; and
Fig. 8 is a schematic plan view of the axial force transfer arrangement of Fig. 7 along a second transverse axis, which second axis is disposed perpendicular to the first axis.

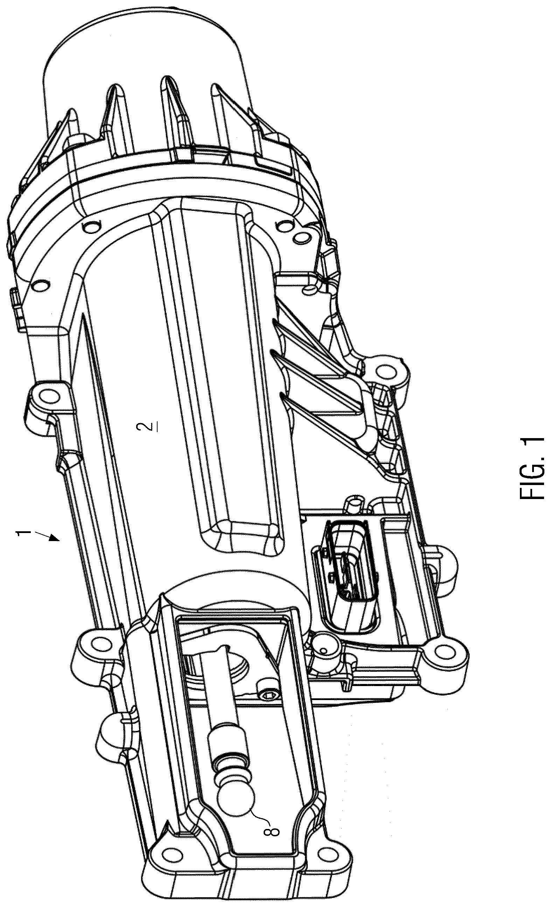

Fig. 1 shows a perspective view of a linear screw and nut drive assembly, here embodied by an electric clutch actuator 1. The electric clutch actuator 1 comprises a housing 2 from which a moveable push rod 8 extends which is driven by the electric clutch actuator for linear movement. The push rod 8 is configured to be connected to a member to be actuated by the linear drive assembly, in this case to one end of a clutch lever (not shown) which is pivotably mounted to be pivoted by the push rod 8 between an engaged and a disengaged position.

The electric clutch actuator 1 includes an electric motor and a transmission (both not shown) within the housing 2. The electric motor drives, via the transmission, a screw (spindle) to rotate around the longitudinal direction defined by the central axis of rotation of screw. In this case the screw and the nut form a ball screw assembly. In such ball screw assembly the helical grooves of the screw are in indirect engagement with internal helical grooves of a nut via balls which roll within these grooves and which are returned by a ball return system after they reached an end of engagement end of the nut. The nut is axially moveable within the housing but held in a manner such that it is prevented from rotation about the central screw axis.

Alternatively there may be a direct driving engagement between the screw and the nut (lead screw and nut drive assembly). However, as mentioned before in the embodiment shown in the Figures, the present invention is embodied by a linear drive utilizing a ball screw assembly consisting of a screw and a nut, each with matching helical grooves, and balls which roll between these grooves and which provide the only contact between the nut and the screw. When screw and nut rotate with respect to each other, the balls are returned by a ball return system back into the ball screw and nut thread raceways formed by the helical grooves.

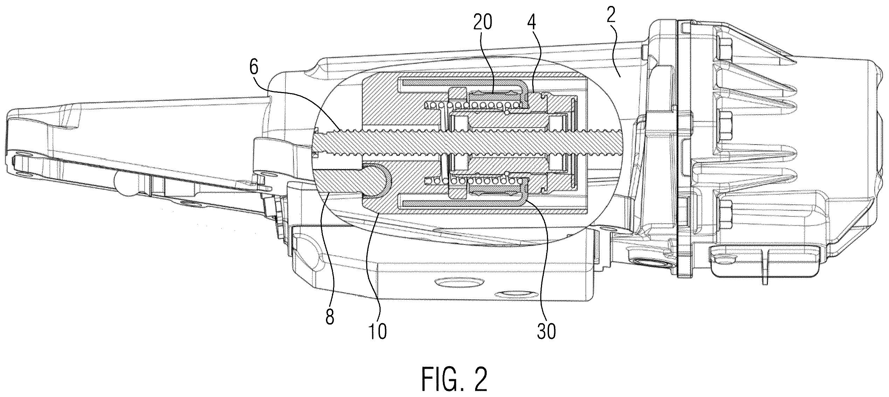

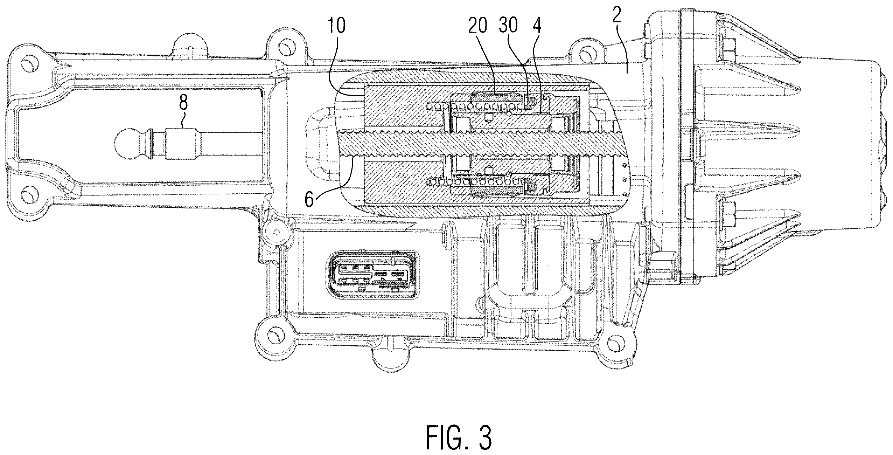

With reference to Figs. 2 and 3 a first overview of the internal structure of the electric clutch actuator 1 will be given, wherein Fig. 2 shows a top view of the electric clutch actuator with a central portion of its housing cut out and the interior shown in cross-section, wherein Fig. 3 shows a similar view as a side view, i.e. the view axis is rotated by 90° around the longitudinal axis compared to Fig. 2. In Fig. 2 the push rod 8 is visible in the interior of the housing 2 in cross-section, and in a side view projecting from the housing. As can be seen in Fig. 2 the push rod 8 is transversely (in a plane perpendicular to the longitudinal axis (= rotational axis of the screw 6) offset with respect to the longitudinal axis of the screw 6. For this reason, if a force is transmitted to the push rod 8, as a reaction a torque is created which is acting between the push rod 8 and the nut 4 which is driven to provide the force for the push rod.

In Fig. 3 the push rod 8 is only visible with its projecting portion outside of the housing, whereas it is out of the plane of the cross-section in the cut out portion of the interior of the housing.

When the screw 6 is driven to rotate, the nut 4 linearly moves along the screw. The nut 4 is guided in the housing for linear movement along the longitudinal axis of the screw, but rotation around the longitudinal axis is prevented.

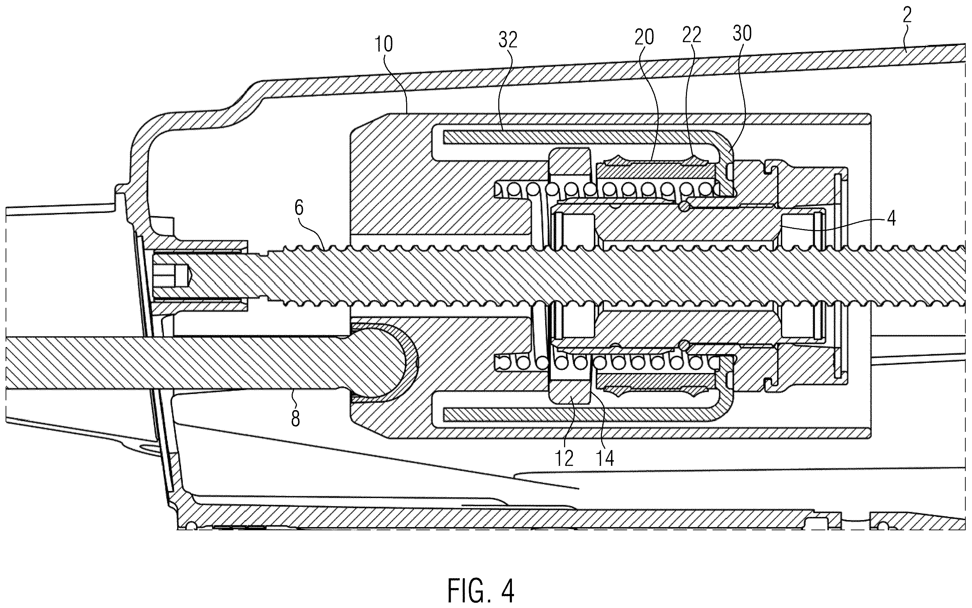

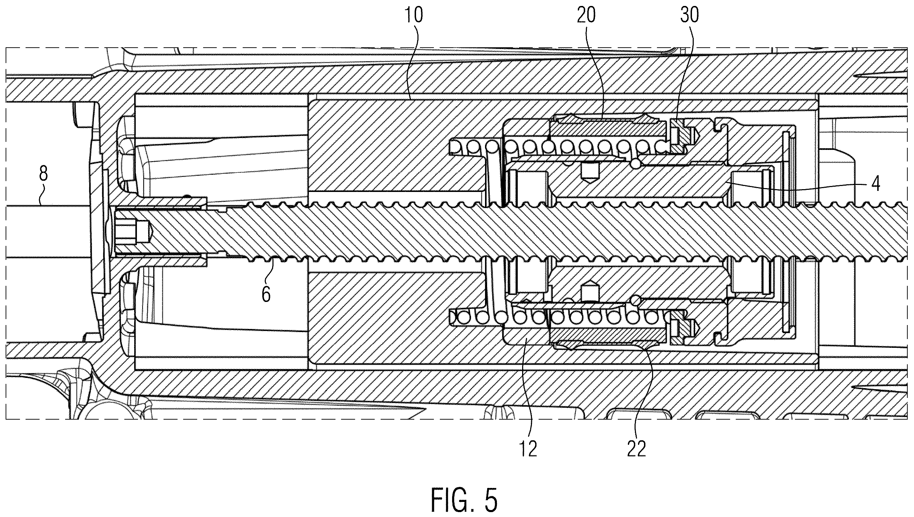

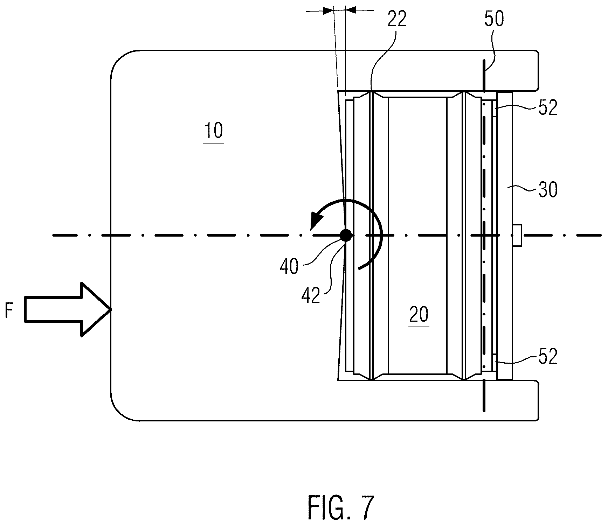

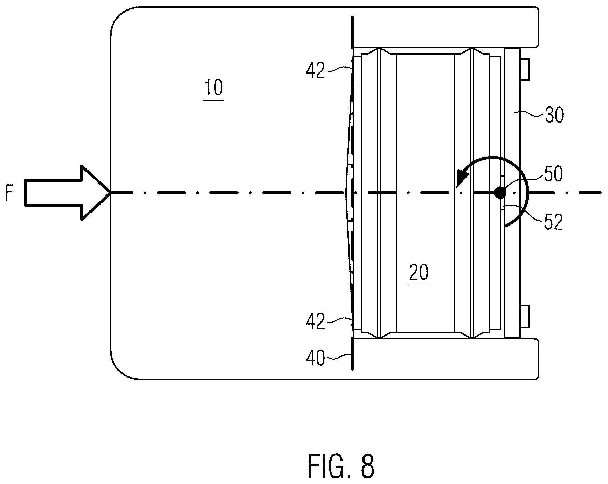

The axial force transfer arrangement transferring force from the nut 4 to the push rod 8 will now be described in more detail first with reference to Figs. 2 and 3, and then in more detail with reference to the enlarged cross-sectional views of Figs. 4 and 5, and the schematic views in Figs. 7 and 8.

With reference to Figs. 2 and 3 the axial force transfer arrangement comprises, in the direction from the push rod 8 to the nut 4 a first force transferring component 10, a second force transferring component 20, and a third force transferring component 30, the components of each pair of subsequent force transferring components being in force transferring contact with each other. In this manner the nut 4 is in force transferring contact with the push rod 8 through the axial force transfer arrangement comprising a train of force transferring components 10, 20, 30.

With reference to Figs. 4 and 5 the first force transferring component 10 is a preload plunger guided for linear movement within the housing 2. The preload plunger has in a front face thereof a recess in which the end portion of push rod 8 is received and connected thereto. The preload plunger has a central bore which partially extends into the preload plunger from a back face opposite to the front face into and partially through the preload plunger. The central bore is continued through the remaining portion of the preload plunger by a smaller diameter hole so that the screw 6 extends through the central bore and further through the central hole, and so extends completely through the preload plunger 10. The central bore of the preload plunger is provided with an abutment ring 12 resting on a shoulder end face of the central bore. A side surface of the abutment ring 12 provides an abutment surface 14 of the central bore which will be discussed in more detail below.

The second force transferring component 20 is a bushing tube received in the central bore. The outer wall of the bushing tube 20 is provided with resilient features 22, in the embodiment shown by two circumferentially extending ridges of elastic material.

As can be seen in the view of Fig. 5 the outer wall of the bushing tube 20 with its ridges 22 has contact with the inner wall of the central bore, whereas in the view of Fig. 4 the outer wall of the bushing tube has no contact with the inner wall of central bore of the preload plunger. This configuration is such that the preload plunger 10 is in principle capable of being tilted about an axis perpendicular to the Figure plane of Fig. 4, without transferring such tilting movement to the second force transferring component 20 in the form of the bushing tube. This ability of relative tilting movement between the second force transferring components 10 and 20 is also a result of the configuration of the first and second force transferring components 10, 20 in such a manner that their contact surfaces define a first axis about which the first force transferring component 10 may pivot with respect to the second force transferring component 20. In the embodiment shown the first contact points between the first and second force transferring components 10, 20 are disposed diametrically opposite with respect to the longitudinal axis. Thus, there are two diametrically opposite contact points, as seen in the view of Fig. 5, where the first and second force transferring components 10 and 20 are in direct contact with each other, whereas in the remaining portion of the circumference between the diametrically opposite contact points there is a gap between the abutment surface 14 of abutment ring 12 of the preload plunger and the bushing tube, see Fig.4.

This configuration of the first contact points between the first and second force transferring components 10, 20 is illustrated in a schematic way in Figs. 7 and 8. As can be seen in Fig. 7 there is contact between the first and second force transferring components 10, 20 at first contact points 42 located in close proximity to the intersection point of the first axis 40 which is the viewing axis of Fig. 7. Fig. 8 shows a corresponding view with the view axis rotated by 90°.

Now the first contact points 42 are visible as two diametrically opposite first contact points 42 between the first and second force transferring components 10, 20. With reference to Fig. 7 again, this configuration of first contact points 42 defining a first axis 40 (perpendicular to the Figure plane of Fig. 7) permits a certain pivotal movement of the first force transferring component 10 with respect to the second force transferring component 20. This tilting movement is indicated in Fig. 7 by the semi-circular arrow around the first axis 40.

Referring to Figs. 4 and 5 again the description of the axial force transfer arrangement will now be continued. The second force transferring component 20 cooperates with a third force transferring component 30 which in the embodiment shown is a load carrier ring 30 which is disposed between the bushing tube 20 and an outwardly projecting portion of the nut 4. The load carrier ring 30 is further provided with two opposite, longitudinally extending rotation stop arms 32 which extend into recesses formed in the preload plunger 10 to prevent rotational movement of the load carrier ring 30 about the longitudinal axis; as a consequence, rotational movements are also prevented for the nut 4 which is coupled to the load carrier ring 30.

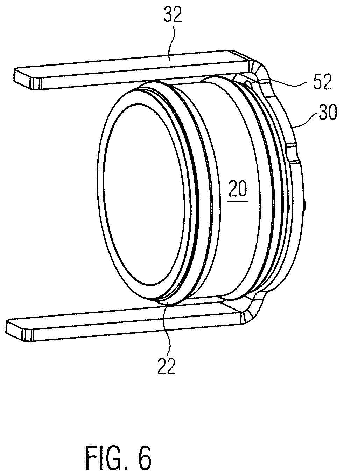

As can be seen in Fig. 4, the second force transferring component 20 is, in the plane of the cross-section of Fig. 4, in direct contact with the adjacent load carrier ring as the third force transferring component 30. Again two diametrically opposite second contact points between the second and third force transferring components 20, 30 are formed in the plane of the cross-section of Fig. 4, whereas the contact surfaces are configured that there is no direct contact between the first and second force transferring components 20, 30 in the remaining portion of the circumference. As can be seen in view of Fig. 5 in which the plane of the cross-section is rotated by 90° with respect to Fig. 4, in Fig. 5 there is a gap between the load carrier ring as the third force transferring component 30 and the bushing tube as the second force transferring component 20. This arrangement of the second contact points between the second and third force transferring components 20, 30 can be better understood with reference to the schematic views of Figs. 6 - 8. As can be seen in the view of Fig. 7 there are two diametrically opposite contact points 52 formed by two small projections. These second contact points 52 are also visible in Fig. 6 which is a perspective view of the couple of load carrier ring 30 and bushing tube 20: In the circumferential area of the rotation stop arms 32 there are small projecting knobs on the inner side of the load carrier ring 30 which form the second contact points and which contact the end surface of the tube bushing 20.

Whereas in the view of Fig. 7 the two second, diametrically opposite contact points 52 are spaced apart, in the view rotated by 90° around the longitudinal direction as shown in Fig. 8 the two diametrically opposite second contact points 52 are now in line in the view axis of Fig. 8 (the view axis coinciding with the second axis 50) and are visible in the middle around the second axis 50 which is oriented perpendicular to the Figure plane of Fig. 8. This arrangement of two diametrically opposite contact points 52 between the second and third force transferring components 20, 30 defines this second axis 50 and allows a certain tilting movement between the first and second force transferring components 20 and 30 about the second axis 50.

As can also be seen in Figs. 7 and 8 the first axis 40 and the second axis 50 are oriented perpendicularly to each other in a plane transverse to the longitudinal axis. In this manner the axial force transfer arrangement formed by the first, second, and third axial force transferring components 10, 20, 30 forms a double joint with two perpendicular joint axes, which cooperate to absorb any torque created by a force input to the push rod (counter force generated by the member being actuated via the push rod) which is offset with respect to the longitudinal screw axis or by any tolerances of the components of the axial force transferring components or bearings or guiding components.

## Claims

1. Screw and nut linear drive assembly comprising a housing (2), a screw (6) within the housing, an electric motor for rotating the screw (6), a nut (4) which is driven, when the screw (6) is rotated, to move linearly in a longitudinal direction coinciding with the screw axis, an axial force transfer arrangement to transfer force from the nut (4) to a push rod (8) to be connected to a member to be actuated by the screw and nut linear drive assembly, **characterized in that**
the axial force transfer arrangement comprises a sequential arrangement of axial force transferring components which comprises, in the direction from the push rod (8) to the nut (4), a first axial force transferring component (10) and a second axial force transferring component (20) in force transmitting contact with each other, and **in that** the first and second axial force transferring components (10, 20) are configured such that first contact points (42) between them define a first axis (40) in a plane perpendicular to the longitudinal direction, about which first axis (40) the second axial force transferring component (20) is capable of tilting with respect to the first axial force transferring component (10) in order to reduce transfer of any torque to the nut (4),
the first axial force transferring component (10) is a preload plunger guided for linear movement in the housing along the longitudinal direction, said preload plunger having a recess disposed in a front face thereof and configured to receive and to be coupled to the push rod (8), wherein the preload plunger comprises a central bore forming an opening in a back face opposite to the front face and having, opposite to the opening, an abutment surface (14) formed by a circumferential shoulder in the central bore, which abutment surface (14) provides the first contact points (42),
the second axial force transferring component (20) is a bushing tube at least partially received in the central bore, the bushing tube and the abutment surface (14) of the preload plunger being configured to come into abutment with each other in two diametrically opposite first contact points (42) only, an outer wall of the bushing tube being provided with resilient surface features (22) which permit tilting movements of the bushing tube with respect to the central bore of the preload plunger about the first axis (40) connecting the two diametrically opposite first contact points (42).

2. Screw and nut linear drive assembly according to claim 1, **characterized in that** the first axis (40) is oriented perpendicular to a transverse line connecting the central screw axis with the point of the axial force transfer arrangement where the push rod (8) is coupled to the axial force transfer arrangement.

3. Screw and nut linear drive assembly according to claim 1 or 2, **characterized in that** the sequential arrangement of axial force transferring components comprises a third axial force transferring component (30) which is disposed between the nut (4) and the second force transmitting component (20) and which is in force transmitting contact with the second force transmitting component (20), and **in that** the second and third axial force transferring components (20, 30) are configured such that second contact points (52) between them define a second axis (50) in the plane perpendicular to the longitudinal direction about which second axis (50) the second axial force transferring component (20) is capable of tilting with respect to the third axial force transferring component (30), wherein the second axis (50) is oriented perpendicular to the first axis (40) .

4. Screw and nut linear drive assembly according to claim 3, **characterized in that**
the third axial force transferring component (30) is an axial load carrier ring being guided for linear movement with the nut and being in driving contact coupled to the nut, wherein rotation stop arms (32) extend from the axial load carrier ring and are received in recesses of the preload plunger configured to prevent rotational movement of the axial load carrier ring relative to the preload plunger, wherein end faces of the axial load carrier ring and the bushing tube facing each other are configured such that they come into abutment against each other in two diametrically opposite second contact points (52) only, the two diametrically opposite second contact points (52) defining the second axis (40) perpendicular to the first axis (40).

5. Screw and nut linear drive assembly according to claim 3, **characterized in that** the resilient surface features (22) of the bushing tube comprise two bulges projecting from and circumferentially extending around the outer wall of bushing tube and being spaced apart in axial direction of the bushing tube, wherein the bulges are made of elastic material and are dimensioned to be in contact with the inner wall of the central bore of the preload plunger when the bushing tube is received in the central bore of the preload plunger.

6. Screw and nut linear drive assembly according to any of the preceding claims, **characterized in that** the screw and nut linear drive assembly is configured as a ball screw and nut assembly or as a leadscrew and nut assembly.

## Patentansprüche

1. Spindel-Mutter-Linearantriebsaufbau mit einem Gehäuse (2), einer Spindel (6) innerhalb des Gehäuses, einem Elektromotor zum Drehen der Spindel (6), einer Mutter (4), die, wenn die Spindel (6) gedreht wird, zur linearen Bewegung in einer mit der Spindelachse zusammenfallenden Längsrichtung angetrieben wird, einem Axialkraft-Übertragungsaufbau zum Übertragen von Kraft von der Mutter (4) auf eine Betätigungsstange (8), die mit einer Komponente verbindbar ist, die durch den Spindel-Mutter-Linearantriebsaufbau betätigt werden soll, **dadurch gekennzeichnet, dass**
der Axialkraft-Übertragungsaufbau eine sequentielle Anordnung von Axialkraft-Übertragungskomponenten aufweist, die in der Richtung von der Betätigungsstange (8) zur Mutter (4) eine erste Axialkraft-Übertragungskomponente (10) und eine zweite Axialkraft-Übertragungskomponente (20) in kraftübertragendem Kontakt miteinander umfasst, und dass die ersten und zweiten Axialkraft-Übertragungskomponenten (10, 20) so ausgestaltet sind, dass erste Kontaktpunkte (42) zwischen ihnen eine erste Achse (40) in einer Ebene senkrecht zur Längsrichtung definieren, wobei die zweite Axialkraft-Übertragungskomponente (20) in der Lage ist, um die erste Achse in Bezug auf die erste Kraftübertragungskomponente (10) zu schwenken, um die Übertragung von jeglichem Drehmoment auf die Mutter (4) zu reduzieren,
die erste Axialkraft-Übertragungskomponente (10) ein Vorspannungsstößel ist, der im Gehäuse zur Linearbewegung entlang der Längsrichtung gelagert ist, wobei der Vorspannungsstößel eine Vertiefung aufweist, die in einer Frontseite davon angeordnet und dazu ausgestaltet ist, die Betätigungsstange (8) aufzunehmen und damit gekoppelt zu werden, wobei der Vorspannungsstößel eine zentrale Bohrung aufweist, die eine Öffnung in einer Rückseite gegenüberliegend zur Frontseite bildet und die, gegenüberliegend zur Öffnung, eine Anlageoberfläche (14) hat, die durch eine in Umfangsrichtung verlaufende Schulter in der zentralen Bohrung gebildet ist, wobei die Anlageoberfläche (14) die ersten Kontaktpunkte (42) bereitstellt,
die zweite Axialkraft-Übertragungskomponente (20) eine Buchsenröhre ist, die wenigstens teilweise in der zentralen Bohrung aufgenommen ist, wobei die Buchsenröhre und die Anlageoberfläche (14) des Vorspannungsstößels dazu ausgestaltet sind, ausschließlich an zwei diametral gegenüberliegenden ersten Kontaktpunkten (42) in Anlage aneinander zu kommen, wobei eine Außenwand der Buchsenröhre mit einer elastischen Oberflächengestaltung (22) versehen ist, die Schwenkbewegungen der Buchsenröhre in Bezug auf die zentrale Bohrung des Vorspannungsstößels um die erste, die zwei diametral gegenüberliegenden ersten Kontaktpunkte (42) verbindende Achse erlaubt.

2. Spindel-Mutter-Linearantriebsaufbau nach Anspruch 1, **dadurch gekennzeichnet, dass** die erste Achse (40) senkrecht orientiert ist zu einer querverlaufenden Linie, die die zentrale Spindelachse mit dem Punkt der Axialkraft-Übertragungsanordnung verbindet, wo die Betätigungsstange (8) mit der Axialkraft-Übertragungsanordnung gekoppelt ist.

3. Spindel-Mutter-Linearantriebsaufbau nach Anspruch 1 oder 2, **dadurch gekennzeichnet, dass** die sequentielle Anordnung von Axialkraft-Übertragungskomponenten eine dritte Axialkraft-Übertragungskomponente (30) aufweist, die zwischen der Mutter (4) und der zweiten Axialkraft-Übertragungskomponenten (20) angeordnet ist und die in kraftübertragendem Kontakt mit der zweiten Axialkraft-Übertragungskomponente (20) steht, und dass die zweiten und dritten Axialkraft-Übertragungskomponenten (20, 30) so gestaltet sind, dass zweite Kontaktpunkte (52) zwischen ihnen eine zweite Achse (50) in der Ebene senkrecht zur Längsrichtung definieren, wobei die zweite Axialkraft-Übertragungskomponente (20) in der Lage ist, um die zweite Achse (50) in Bezug auf die dritten Axialkraft-Übertragungskomponente (30) zu schwenken, wobei die zweite Achse (50) senkrecht zur ersten Achse (40) orientiert ist.

4. Spindel-Mutter-Linearantriebsaufbau nach Anspruch 3, **dadurch gekennzeichnet, dass** die dritte Axialkraft-Übertragungskomponente (30) ein Axiallast-Übertragungsring ist, der zur Linearbewegung mit der Mutter gelagert ist und in Antriebskontakt mit der Mutter gekoppelt ist, wobei Rotationsstopper-Arme (32) von dem Axiallast-Übertragungsring ausgehen und in Vertiefungen des Vorspannungsstößels aufgenommen sind, die dazu ausgestaltet sind, um Rotationsbewegung des Axiallast-Übertragungsrings relativ zum Vorspannungsstößel zu verhindern, wobei einander zugewandte Endflächen des Axiallast-Übertragungsrings und der Buchsenröhre so ausgestaltet sind, dass sie ausschließlich an zwei diametral gegenüberliegenden zweiten Kontaktpunkten (52) in Kontakt miteinander kommen, wobei die beiden diametral gegenüberliegenden zweiten Kontaktpunkte (52) die zweite Achse (40) senkrecht zur ersten Achse (40) definieren.

5. Spindel-Mutter-Linearantriebsaufbau nach Anspruch 3, **dadurch gekennzeichnet, dass** die elastischen Oberflächengestaltungen (22) der Buchsenröhre zwei Wülste aufweisen, die von der Außenwand der Buchsenröhre vorstehen und in Umfangsrichtung darum verlaufen und die auf Abstand in axialer Richtung der Buchsenröhre zueinander sind, wobei die Wülste aus einem elastischen Material gebildet sind und solche Abmessungen haben, dass sie mit der Innenwand der zentralen Bohrung des Vorspannungsstößels in Kontakt sind, wenn die Buchsenröhre in der zentralen Bohrung des Vorspannungsstößels aufgenommen ist.

6. Spindel-Mutter-Linearantriebsaufbau nach einem der vorhergehenden Ansprüche, **dadurch gekennzeichnet, dass** der Spindel-Mutter-Linearantriebsaufbau als Kugelumlaufspindel-Mutter-Linearantriebsaufbau oder als ein Gewindespindel-Mutter-Aufbau ausgestaltet ist.

## Revendications

1. Ensemble d'entraînement linéaire à vis et écrou comprenant un boîtier (2), une vis (6) à l'intérieur du boîtier, un moteur électrique pour faire tourner la vis (6), un écrou (4) qui est entraîné, lorsque la vis (6) est entraînée en rotation, pour se déplacer linéairement dans une direction longitudinale coïncidant avec l'axe de vis, un agencement de transfert de force axiale pour transférer une force de l'écrou (4) à une tige de poussée (8) destinée à être reliée à un élément devant être actionné par l'ensemble d'entraînement linéaire à vis et écrou, **caractérisé en ce que**
l'agencement de transfert de force axiale comprend un agencement séquentiel de composants de transfert de force axiale qui comprend, dans la direction allant de la tige de poussée (8) à l'écrou (4), un premier composant de transfert de force axiale (10) et un deuxième composant de transfert de force axiale (20) en contact de transmission de force l'un avec l'autre, et **en ce que** les premier et deuxième composants de transfert de force axiale (10, 20) sont configurés de telle sorte que des premiers points de contact (42) entre eux définissent un premier axe (40) dans un plan perpendiculaire à la direction longitudinale, premier axe (40) autour duquel le deuxième composant de transfert de force axiale (20) est capable de basculer par rapport au premier composant de transfert de force axiale (10) afin de réduire un transfert de tout couple vers l'écrou (4),
le premier composant de transfert de force axiale (10) est un piston de précharge guidé pour un déplacement linéaire dans le boîtier le long de la direction longitudinale, ledit piston de précharge présentant un évidement disposé dans une face avant de celui-ci et configuré pour recevoir et être couplé à la tige de poussée (8), dans lequel le piston de précharge comprend un alésage central formant une ouverture dans une face arrière opposée à la face avant et présentant, à l'opposé de l'ouverture, une surface de butée (14) formée par un épaulement circonférentiel dans l'alésage central, laquelle surface de butée (14) fournit les premiers points de contact (42),
le deuxième composant de transfert de force axiale (20) est un tube à douille au moins partiellement reçu dans l'alésage central, le tube à douille et la surface de butée (14) du piston de précharge étant configurés pour venir en butée l'un contre l'autre en deux premiers points de contact diamétralement opposés (42) uniquement, une paroi externe du tube à douille étant pourvue de caractéristiques de surface élastiques (22) qui permettent des mouvements de basculement du tube à douille par rapport à l'alésage central du piston de précharge autour du premier axe (40) reliant les deux premiers points de contact diamétralement opposés (42).

2. Ensemble d'entraînement linéaire à vis et écrou selon la revendication 1, **caractérisé en ce que** le premier axe (40) est orienté perpendiculairement à une ligne transversale reliant l'axe de vis central au point de l'agencement de transfert de force axiale où la tige de poussée (8) est couplée à l'agencement de transfert de force axiale.

3. Ensemble d'entraînement linéaire à vis et écrou selon la revendication 1 ou 2, **caractérisé en ce que** l'agencement séquentiel de composants de transfert de force axiale comprend un troisième composant de transfert de force axiale (30) qui est disposé entre l'écrou (4) et le deuxième composant de transmission de force (20) et qui est en contact de transmission de force avec le deuxième composant de transmission de force (20), et **en ce que** les deuxième et troisième composants de transfert de force axiale (20, 30) sont configurés de telle sorte que des seconds points de contact (52) entre eux définissent un second axe (50) dans le plan perpendiculaire à la direction longitudinale, second axe (50) autour duquel le deuxième composant de transfert de force axiale (20) est capable de basculer par rapport au troisième composant de transfert de force axiale (30), dans lequel le second axe (50) est orienté perpendiculairement au premier axe (40).

4. Ensemble d'entraînement linéaire à vis et écrou selon la revendication 3, **caractérisé en ce que**
le troisième composant de transfert de force axiale (30) est un anneau de support de charge axiale guidé pour un mouvement linéaire avec l'écrou et étant en contact d'entraînement couplé à l'écrou, dans lequel des bras de butée de rotation (32) s'étendent à partir de l'anneau de support de charge axiale et sont reçus dans des évidements du piston de précharge configurés pour empêcher le mouvement de rotation de l'anneau de support de charge axiale par rapport au piston de précharge, dans lequel les faces d'extrémité de l'anneau de support de charge axiale et du tube à douille se faisant face sont configurées de telle sorte qu'elles viennent en butée l'une contre l'autre en deux seconds points de contact diamétralement opposés (52) uniquement, les deux seconds points de contact diamétralement opposés (52) définissant le second axe (40) perpendiculaire au premier axe (40).

5. Ensemble d'entraînement linéaire à vis et écrou selon la revendication 3, **caractérisé en ce que** les caractéristiques de surface élastiques (22) du tube à douille comprennent deux renflements faisant saillie et s'étendant circonférentiellement autour de la paroi externe du tube à douille et étant espacés dans la direction axiale du tube à douille, dans lequel les renflements sont en matériau élastique et sont dimensionnés pour être en contact avec la paroi interne de l'alésage central du piston de précharge lorsque le tube à douille est reçu dans l'alésage central du piston de précharge.

6. Ensemble d'entraînement linéaire à vis et écrou selon l'une quelconque des revendications précédentes, **caractérisé en ce que** l'ensemble d'entraînement linéaire à vis et écrou est configuré comme un ensemble à vis à bille et écrou ou comme un ensemble à vis-mère et écrou.
